# EUROPEAN PATENT APPLICATION

(11) **EP 4 087 030 A1**
(43) Date of publication of application: **09.11.2022**
(21) Application number: 21886608.5
(22) Date of filing: 08.10.2021
(51) Int. Cl.: H01M 50/124, H01M 50/116, H01M 50/109, H01M 50/153, H01M 50/166, H01M 50/572, H01M 50/342, H01M 10/04

(54) **SECONDARY BATTERY HAVING ANTI-CORROSION LAYER ON INNER SURFACE OF BATTERY CASE**

(30) Priority: 27.10.2020 KR 20200140607
(71) Applicant: LG Energy Solution, Ltd., Seoul 07335 (KR)
(72) Inventor: YUN, Hyunwoong, Daejeon 34122 (KR); KANG, Sungjoong, Daejeon 34122 (KR)
(74) Representative: Goddar, Heinz J.
(86) International application number: PCT/KR2021/013893
(87) International publication number: WO 2022/092614

(57) **Abstract**

The present disclosure provides a secondary battery in which an anti-corrosion layer of an organic/inorganic mixed layer is formed on a part of an inner surface of the battery case of a cylindrical secondary battery and the battery case of a prismatic secondary battery.

## Description

### [TECHNICAL FIELD]

### Cross Citation with Related Application(s)

This application claims the benefit of Korean Patent Application No. 10-2020-0140607 filed on October 27, 2020 with the Korean Intellectual Property Office, the disclosure of which is incorporated herein by reference in its entirety.

The present disclosure relates to a secondary battery having an anti-corrosion layer formed on the inner surface of a battery case.

### [BACKGROUND]

Due to the rapid increase in the use of fossil fuels, the demand for the use of alternative energy or clean energy is increasing, and as part thereof, the fields that are being studied most actively are the fields of power generation and power storage using electrochemistry.

At present, a secondary battery is a representative example of an electrochemical device that utilizes such electrochemical energy, and the range of use thereof tends to be gradually expanding.

Recently, along with the increase of the technological development and demand for mobile devices such as portable computers, portable phones, and cameras, the demand for secondary batteries has also sharply increased as an energy source. Among such secondary batteries is a lithium secondary battery exhibiting high charge/discharge characteristics and lifetime characteristics and being environmentally friendly, in which much research has been carried out and which is now commercialized and widely used.

Generally, the secondary battery has a structure in which an electrode assembly comprising a positive electrode, a negative electrode, and a porous separator is incorporated in in a battery case in a state of being impregnated with a non-aqueous electrolyte.

In this case, depending upon the shape of a battery case, a secondary battery may be generally classified as a cylindrical secondary battery or a prismatic secondary battery in which a stacked/folded type, or wound type electrode assembly is housed in a case made of metal as a battery case, a pouch type secondary battery in which a stacked type or stacked/folding type electrode assembly is incorporated in a pouch type battery case made of an aluminum laminate sheet, and a coin-type battery in which a coin-type electrode assembly is housed in an upper case and a lower case made of metal.

Here, in the case of the prismatic, cylindrical, or coin-type battery, since the metal, not polymer, is used as the exterior material, the corrosion of a metal may occur depending on the type of electrolyte solution. Thus, there is a limit to the electrolyte solution that can be used, and specifically, there is a problem that the corrosion is extremely severe in an electrolyte solution using an imide-based salt.

Therefore, there is a need to develop a technology for a secondary battery that can solve the above problems and effectively prevent the corrosion of a metal can regardless of the type of electrolyte.

### [DETAILED DESCRIPTION OF THE INVENTION]

### [Technical Problem]

The present disclosure has been made to solve the above-mentioned problems and other technical problems that have yet to be resolved.

Specifically, an object of the present disclosure is to provide a secondary battery that can effectively suppress the corrosion of the secondary battery case due to contact with the electrolyte solution.

### [Technical Solution]

In order to achieve the above object, according to one embodiment of the present disclosure, there is provided a cylindrical secondary battery configured such that an electrode assembly including a positive electrode, a separator, and a negative electrode is housed in a battery case together with an electrolyte solution,
wherein the battery case is made of metal, and comprises
a cylindrical can that includes a housing part in which the electrode assembly and the electrolyte solution are housed together and a beading part located at an upper part of the housing part; and a cap assembly that is mounted on the opened upper end part of the cylindrical can and includes an upper end cap as a protrusion-type electrode terminal, and
wherein an anti-corrosion layer of an organic-inorganic mixed layer is formed on the inner surface of the housing part where the battery case comes into contact with the electrolyte solution, or on the inner surface of the housing part and the beading part.

At this time, the metal may be made of any one selected from the group consisting of aluminum, nickel, stainless steel (SUS), copper, iron, bronze, and brass.

Further, the electrode assembly may be a jelly-roll type or stack/folding type electrode assembly.

More specifically, a gasket is mounted on the upper part of the beading part of the cylindrical can,
the cap assembly is configured such that a safety device for current interruption (PTC device) and a safety vent for internal pressure drop are stacked under the upper end cap, and a current interruption device (CID) is formed at the lower end of the safety vent,
the electrode assembly comprises a positive electrode tab and a negative electrode tab that are drawn out from the electrode assembly, wherein the positive electrode tab is connected to the cap assembly, and the negative electrode tab is connected to the bottom surface spaced apart from the housing part of the cylindrical can, and
the anti-corrosion layer may be formed on the surface of the gasket toward the inside surface of the secondary battery.

In one specific embodiment, the secondary battery further comprises a hollow center pin inserted into the central part of the electrode assembly, and the anti-corrosion layer may be further formed on the outer surface where the center pin and the electrolyte solution come into contact with each other.

Further, an anti-corrosion layer is further formed even on the hollow inner surface of the center pin.

At this time, the center pin may be made of any one selected from the group consisting of aluminum, nickel, stainless steel (SUS), copper, iron, bronze, and brass.

The organic-inorganic mixed layer may comprise one or more inorganic particles selected from the group consisting of (a) inorganic particles having a dielectric constant of 1 or more, (b) inorganic particles having piezoelectricity, (c) thermal conductive inorganic particles and (d) inorganic particles having lithium ion transport capability, and a binder polymer.

Meanwhile, according to another embodiment of the present disclosure, there is provided a prismatic secondary battery configured such that an electrode assembly including a positive electrode, a separator, and a negative electrode is housed in a battery case together with an electrolyte solution,
wherein the battery case is made of metal, and comprises
a rectangular can body that is opened in its upper end and houses the electrode assembly and the electrolyte solution together; and a top cap including cap terminals that are coupled and sealed to the upper end part of the can body and are connected to the electrode terminals of the electrode assembly, and
wherein an anti-corrosion layer of an organic-inorganic mixed layer is formed on the inner surface of the can body where the battery case comes into contact with the electrolyte solution, or on the inner surface of the can body and the inner surface of the top cap excluding the cap terminals.

At this time, the metal may be made of any one selected from the group consisting of aluminum, nickel, stainless steel (SUS), copper, iron, bronze, and brass.

The electrode assembly may be a jelly-roll type or stack/folding type electrode assembly.

The electrode assembly comprises a positive electrode tab and a negative electrode tab drawn out from the electrode assembly, and the positive electrode tab and the negative electrode tab may be connected to the cap terminals, respectively.

In one specific embodiment, the prismatic secondary battery also further comprises a hollow center pin inserted into the central part of the electrode assembly, and the anti-corrosion layer may be further formed on the outer surface where the center pin and the electrolyte solution come into contact with each other.

An anti-corrosion layer may be further formed even on the hollow inner surface of the center pin.

At this time, the center pin may be made of any one selected from the group consisting of aluminum, nickel, stainless steel (SUS), copper, iron, bronze, and brass.

The organic-inorganic mixed layer may comprise one or more inorganic particles selected from the group consisting of (a) inorganic particles having a dielectric constant of 1 or more, (b) inorganic particles having piezoelectricity, (c) thermal conductive inorganic particles and (d) inorganic particles having lithium ion transport capability, and a binder polymer.

### [BRIEF DESCRIPTION OF THE DRAWINGS]

Fig. 1 is a schematic diagram of a cylindrical secondary battery according to an embodiment of the present disclosure; and
Fig. 2 is a schematic diagram of a prismatic secondary battery according to another embodiment of the present disclosure.

### [DETAILED DESCRIPTION OF THE EMBODIMENTS]

Hereinafter, the present disclosure will be described in more detail for a better understanding of the present disclosure.

Terms or words used in the present specification and claims should not be construed as limited to ordinary or dictionary terms, and the present disclosure should be construed with meanings and concepts that are consistent with the technical idea of the present disclosure based on the principle that the inventors may appropriately define concepts of the terms to appropriately describe their own disclosure in the best way.

The technical terms provided herein is merely used for the purpose of describing particular embodiments only, and is not intended to be limiting of the present disclosure. The singular forms "a," "an," and "the" are intended to include the plural forms as well, unless the context clearly indicates otherwise.

Further, throughout the specification, when a portion is referred to as "including" a certain component, it means that the portion can further include other components, without excluding the other components, unless otherwise stated.

According to one embodiment of the present disclosure, there can be provided a cylindrical secondary battery configured such that an electrode assembly including a positive electrode, a separator, and a negative electrode is housed in a battery case together with an electrolyte solution,
wherein the battery case is made of metal, and comprises a cylindrical can that includes a housing part in which the electrode assembly and the electrolyte solution are housed together and a beading part located at an upper part of the housing part; and a cap assembly that is mounted on the opened upper end part of the cylindrical can and includes an upper end cap as a protrusion-type electrode terminal, and wherein an anti-corrosion layer of an organic-inorganic mixed layer is formed on the inner surface of the housing part where the battery case comes into contact with the electrolyte solution, or on the inner surface of the housing part and the beading part.

At this time, the metal constituting the battery case may be made of any one selected from the group consisting of aluminum, nickel, stainless steel (SUS), copper, iron, bronze, and brass. Specifically, the metal may be made of aluminum or stainless steel (SUS), and more specifically, it may be made of stainless steel (SUS).

The degree of corrosion of these metals is severe depending on what kind of material is used as the electrolyte solution, the lifespan characteristics are deteriorated, or it will be unusable any more or the safety may be threatened.

Therefore, the present disclosure is characterized in that, in a secondary battery in which the battery case is made of metal, an anti-corrosion layer is formed on the inner surface where the battery case comes into contact with the electrolyte solution to prevent corrosion due to the electrolyte solution.

That is, in the cylindrical secondary battery, the inner surface of the receiving part is a portion that is directly and completely exposed to the electrolyte solution, and when the anti-corrosion layer is formed on the inner surface, corrosion due to the electrolyte solution can be effectively suppressed and prevented.

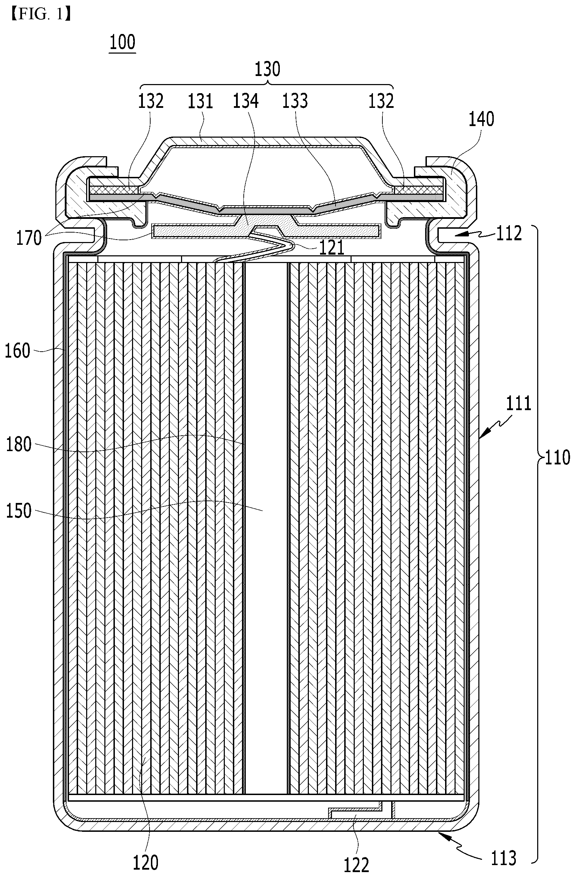

In the present disclosure, a schematic diagram of a cylindrical secondary battery in which such an anti-corrosion layer is formed is shown in Fig. 1 below.

Referring to Fig. 1, the secondary battery 100 according to the present disclosure is structured such that an electrode assembly 120 including a positive electrode, a separator, and a negative electrode is housed together with an electrolyte solution in a cylindrical can 110 including a housing part 111 and a beading part 112 as a battery case, wherein a cap assembly 130 including the upper end cap 131 is located at the opened upper end part of the cylindrical can 110 and seals the cylindrical can 110. An anti-corrosion layer 160 is formed on the inner surface of the housing part 111 in which the electrode assembly 120 is housed, or on the inner surface of the housing part 111 and the beading part 112.

Here, the housing part 111 is a portion in which the electrode assembly 120 is incorporated, which is separated from the bottom surface 113 of the cylindrical can 110 described below, which is located to be spaced apart from the electrode assembly.

In this case, the electrode assembly 120 may be a jelly-roll type or a stack/folding type electrode assembly, without being limited thereto.

The jelly-roll type electrode assembly is manufactured by interposing a sheet-type separator between a sheet-type positive electrode and a sheet-type negative electrode and winding it.

The stack/folding type electrode assembly is manufactured by arranging a unit electrode, a full cell stacked so that electrodes having the same polarity are located at both ends, and a bi-cell stacked so that electrodes having different polarities are located at both ends, on a sheet-type separation film, and winding the same.

Specific configurations of the jelly-roll type electrode assembly and the stack/folding type electrode assembly are conventionally known, and thus a detailed description thereof will be omitted herein.

More specifically, the secondary battery 100 according to the present disclosure includes a gasket 140 mounted on the upper part of the beading part 112 of the cylindrical can 110, and is formed in a structure in which the cap assembly 130 includes an upper end cap 131, a current interruption safety device (PTC device) 132 stacked under the upper end cap 131 and a safety vent 133 for internal pressure drop, and a current interruption device (CID) 134 formed at the lower end of the safety vent 133.

Further, the positive electrode tab 121 and the negative electrode tab 122 are drawn out from the electrode assembly 120, the positive electrode tab 121 is connected to the cap assembly 130, and the negative electrode tab 122 is connected to a bottom surface 113 spaced apart from a housing part 111 of the cylindrical can 130.

Here, the current interruption safety device 132, the safety vent 133, and the current interruption device 134 all are preferably structures through which current flows, which are formed in order to ensure the safety of the secondary battery.

Since other specific contents are conventionally known, a description thereof will be omitted herein.

Further, the current interruption safety device 132, the safety vent 133, the current interruption device 134, as well as the upper end cap 131 serving as a positive electrode terminal, the bottom surface 113 of the cylindrical can serving as a negative electrode terminal, and the positive electrode tab 121 and the negative electrode tab 122 preferably have conductivity.

Therefore, the anti-corrosion layer of the organic-inorganic mixed layer cannot be formed on the inner surfaces of the components.

That is, it is preferable that the anti-corrosion layer is formed on a portion that does not require such conductivity.

Specifically, it is preferable that the anti-corrosion layer 160 is formed on the inner surface of the housing part, or the inner surface of the housing part and the beading part. Since the gasket also does not require such conductivity, an anti-corrosion layer 160 may be formed even on the surface of the gasket toward the inside surface of the secondary battery.

Meanwhile, no layer may be formed on the surface of the top cap 131, the bottom surface 113 of the cylindrical can, the current interruption safety device 132 , the safety vent 133 , the current interruption device 134, the positive electrode tab 121 and the negative electrode tab 122 toward the inside surface of the secondary battery 100, but more preferably, in order to prevent corrosion due to leakage of the electrolyte solution while maintaining conductivity, a conductive layer 170 containing a conductive material capable of preventing corrosion while being a material having conductivity may be further formed.

On the other hand, further, the secondary battery 100 according to the present disclosure may further include a hollow center pin 150 that is inserted into the central part of the jelly-roll type electrode assembly 120.

At this time, the center pin 150 may also be made of any one selected from the group consisting of metal, specifically aluminum, nickel, stainless steel (SUS), copper, iron, bronze, and brass, which thus causes corrosion to the electrolyte.

Therefore, although the outer surface and the inner surface of the center pin are not clearly shown in the figure, also in the outer surface coming into contact with an electrolyte solution in the center pin 150, an anti-corrosion layers 180 may be further formed, and more specifically, the anti-corrosion layer 180 may be formed up to the hollow inner surface.

In another embodiment, there is provided a prismatic secondary battery configured such that an electrode assembly including a positive electrode, a separator, and a negative electrode is housed in a battery case together with an electrolyte solution,
wherein the battery case is made of metal, and comprises
a rectangular can body that is opened in its upper end and houses the electrode assembly and the electrolyte solution together; and a top cap including cap terminals that are coupled and sealed to the upper end part of the can body and are connected to the electrode terminals of the electrode assembly, and
wherein an anti-corrosion layer of an organic-inorganic mixed layer is formed on the inner surface of the can body where the battery case comes into contact with the electrolyte solution, or on the inner surface of the can body and the inner surface of the top cap excluding the cap terminals.

At this time, the metal constituting the battery case may be made of any one selected from the group consisting of aluminum, nickel, stainless steel (SUS), copper, iron, bronze, and brass. Specifically, the metal may be made of aluminum or stainless steel (SUS), and more specifically, it may be stainless steel (SUS).

That is, similar to the cylindrical shape, even in a prismatic secondary battery, the inner surface of the can body is a portion that is directly and completely exposed to the electrolyte solution, and when the anti-corrosion layer is formed on the inner surface, corrosion due to the electrolyte solution can be effectively suppressed and prevented. Further, the top cap can also form the anti-corrosion layer in a portion excluding the cap terminals that requires conductivity.

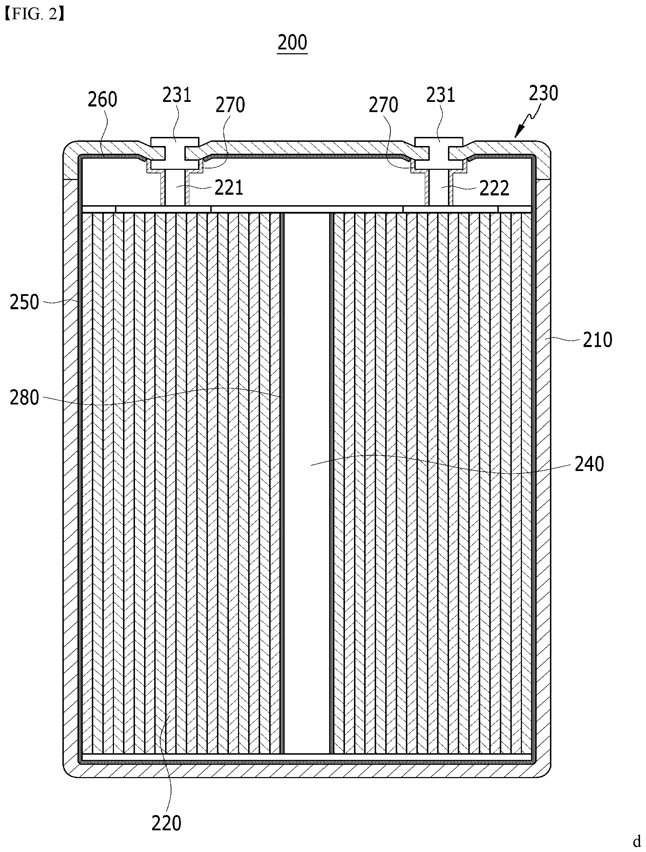

In the present disclosure, a schematic diagram of a prismatic secondary battery having such an anti-corrosion layer is shown in Fig. 2 below.

Referring to Fig. 2, the secondary battery 200 according to the present disclosure comprises a rectangular can body 210 that is opened in its upper end and houses the electrode assembly 220 and the electrolyte solution together, and a top cap 230 including cap terminals 231 that are coupled and sealed to the upper end part of the can body 210 and are connected to the electrode terminals 221 and 222 of the electrode assembly 220.

At this time, the anti-corrosion layers 250 and 260 are formed on the inner surface of the can body 210, or the inner surface of the can body 210 and the inner surface of the top cap 230 excluding the cap terminals 231.

Here, the electrode assembly 220 may be, but not limited to, a jelly-roll type or stack/folding type electrode assembly as described for the cylindrical secondary battery.

Further, the electrode assembly 220 includes a positive electrode tab 221 and a negative electrode tab 222 drawn out from the upper part of the electrode assembly 220, and the positive electrode tab 221 and the negative electrode tab 222 each have a structure connected to the cap terminals 231.

At this time, since the positive electrode tab 221, the negative electrode tab 222, and the cap terminals 231 must have conductivity, any anti-corrosion layers 250 and 260 cannot be formed and no layer may be formed, but preferably, in order to prevent corrosion due to leakage of electrolyte solution while maintaining conductivity, a conductive layer 270 including a conductive material capable of preventing corrosion while being a material having conductivity may be further formed.

Furthermore, the secondary battery 200 according to the present invention may further include a hollow center pin 240 that is inserted into the central part of the jelly-roll type electrode assembly 220.

At this time, the center pin 240 may also be made of any one selected from the group consisting of metal, specifically aluminum, nickel, stainless steel (SUS), copper, iron, bronze, and brass, which thus causes corrosion to the electrolyte solution.

Therefore, although the outer surface and inner surface of the center pin are not clearly shown in the figure, an anti-corrosion layers 280 may be further formed, and more specifically, the anti-corrosion layer 280 may be formed up to the hollow inner surface.

That is, even in the prismatic secondary battery, the anti-corrosion layers 260 and 280 are formed in the portion that is likely to come into contact with the electrolyte solution, thereby effectively preventing corrosion due to the contact with the electrolyte solution.

Meanwhile, Figs. 1 and 2 illustrate the configuration of a cylindrical secondary battery and a prismatic secondary battery according to one embodiment, but in a cylindrical secondary battery and a prismatic secondary battery having various structures, if an anti-corrosion layer is formed on a member that does not require conductivity, it goes without saying that all of them are included in the scope of the present disclosure.

Meanwhile, the organic-inorganic mixed layer, which is a material constituting the anti-corrosion layer, comprises one or more inorganic particles selected from the group consisting of (a) inorganic particles having a dielectric constant of 1 or more, (b) inorganic particles having piezoelectricity, (c) thermal conductive inorganic particles and (d) inorganic particles having lithium ion transport capability, and a binder polymer.

The inorganic particles having piezoelectricity are insulators at normal pressure, but when a certain pressure is applied, they mean a material having the physical property of conducting electricity due to a change in its internal structure. The inorganic particles not only exhibit a high dielectric constant characteristic that a dielectric constant is 100 or more, but also generate an electric charge when tensioned or compressed by applying a certain pressure, so that one side is positively charged and the other side is negatively charged, thereby having a function of generating a potential difference between both surfaces.

Examples of the inorganic particles having piezoelectricity include BaTiO₃, Pb(Zr,Ti)O₃ (PZT), Pb₁₋ₓLaₓZn_{1-y}Ti_{y}O₃ (PLZT), PB(Mg₃Nb_{2/3})O₃-PbTiO₃ (PMN-PT) hafnia (HfO₂) or a mixture thereof, and the like, but are not limited thereto.

The inorganic particles having lithium ion transport capability refer to inorganic particles containing lithium element but having a function of moving lithium ions without storing lithium.

Examples of the inorganic particles having the lithium ion transport capability include lithium phosphate (Li₃PO₄), lithium titanium phosphate (LixTiy(PO₄)₃, 0<x<2, 0<y<3), lithium aluminum titanium phosphate (LiₓAl_{y}Ti_{z}(PO₄)₃, 0<x<2, 0<y<1, 0<z<3), (LiAlTiP)ₓO_{y}-based glass (0<x<4, 0<y<13) such as 14Li₂O-9Al₂O₃-38TiO₂-39P₂O₅, lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5) such as Li_{3.25}Ge_{0.25}P_{0.75}S₄, lithium nitride (LiₓN_{y}, 0<x<4, 0<y<2) such as Li₃N, SiS₂ based glass (LiₓSi_{y}S_{z}, 0<x<3, 0<y<2, 0<z<4) such as Li₃PO₄-Li₂S-SiS₂, P₂S₅-based glass (LiₓP_{y}S_{z}, 0<x<3, 0<y<3, 0<z<7) such as LiI-Li₂S-P₂S₅, or a mixture thereof, but are not limited thereto.

Additionally, examples of inorganic particles having a dielectric constant of 1 or more include SrTiO₃, SnO₂, CeO₂, MgO, NiO, CaO, ZnO, ZrO₂, Y₂O₃, Al₂O₃, TiO₂, SiC or a mixture thereof, but are not limited thereto.

The thermally conductive inorganic particles are a material having that provides low heat resistance, but do not provide electrical conductivity and thus has insulating properties, and examples thereof may be one or more selected from the group consisting of aluminum nitride (AlN), boron nitride (BN), alumina (Al₂O₃), silicon carbide (SiC), and beryllium oxide (BeO), but are not limited thereto.

The inorganic particles having a high dielectric constant, the inorganic particles having piezoelectricity, the thermally conductive mineral particles, and the inorganic particles having lithium ion transport capability as mentioned above can also be used in combination.

The size of the inorganic particles is not limited, but is preferably in the range of 0.001 to 10 *µ*m as much as possible in order to ensure an appropriate porosity between the inorganic particles. If the size is less than 0.001 *µ*m, the dispersibility is lowered, and so it is difficult to adjust the physical properties when preparing the organic-inorganic mixed layer. If the size exceeds 10 *µ*m, the thickness increases, the mechanical properties deteriorate, and due to the excessively large pore size, it does not perform the role of sufficient corrosion protection, and the probability that an internal short circuit occurs during battery charging and discharging increases.

The content of the inorganic particles is not particularly limited, but is preferably in the range of 1 to 99% by weight, particularly preferably 10 to 95% by weight, based on 100% by weight of the mixture of the inorganic particles and the binder polymer. If the content is less than 1% by weight, the content of the polymer becomes excessively large, and the pore size and porosity may be reduced due to a decrease in the void space formed between the inorganic particles. On the contrary, if the content exceeds 99% by weight, the polymer content is too small, the adhesive force between the inorganic substances is weakened, and the final mechanical properties are deteriorated.

In this case, the pore size and porosity may be adjusted together by adjusting the inorganic particle size and content.

Further, the organic-inorganic mixed layer made of the inorganic particles and the binder polymer is robust even under high temperature conditions due to the heat resistance of the inorganic particles. Therefore, the organic-inorganic mixed layer is effective in preventing a short circuit even under excessive conditions due to internal or external factors such as high temperature, overcharging, and external impact, and the thermal runaway can be delayed due to the endothermic effect of the inorganic particles.

The binder polymer is not limited as long as it does not cause a side reaction with the electrolyte solution. In particular, a glass transition temperature (Tg) as low as possible may be used, and is preferably in the range of -200 to 200°C.

Examples of such binder polymers include polyvinylidene fluoride-co-hexafluoropropylene, polyvinylidene fluoride-cotrichloroethylene, polymethylmethacrylate, polyacrylonitrile, polyvinylpyrrolidone, polyvinylacetate, polyethylene-co-vinyl acetate, polyethylene oxide, cellulose acetate, cellulose acetate butyrate, cellulose acetate propionate, cyanoethyl pullulan, cyanoethylpolyvinylalcohol, cyanoethylcellulose, cyanoethylsucrose, pullulan, carboxyl methyl cellulose, acrylonitrile-styrene-butadiene copolymer, polyimide, or mixture thereof, and the like, but are not limited thereto. Any material may be used alone or in combination as long as it is a material having the above-mentioned properties.

On the other hand, the thickness of the anti-corrosion layer may be 0.01 *µ*m to 100 *µ*m, specifically 0.5 to 30 *µ*m, more specifically 1 to 10 *µ*m, most specifically 3 to 7 *µ*m.

If the thickness of the anti-corrosion layer is too thin outside the above range, it is difficult to sufficiently suppress corrosion of the metal case, and if the thickness of the anti-corrosion layer is too thick, good conductivity cannot be obtained or the size may become too large and cell assembly may become difficult, which is thus not preferable.

On the other hand, since the specific configuration of the electrode assembly of the present disclosure, and specific explanation of the positive electrode, the negative electrode, the separator, and the electrolyte solution are conventionally known, a detailed description will be omitted herein.

However, the electrolyte solution contains a non-aqueous electrolyte solution and a lithium salt, wherein the secondary battery according to the present disclosure is more effective when a lithium imide-based salt is used as the lithium salt.

The lithium imide-based salt may be lithium bis(fluorosulfonyl)imide, lithium bis(trifluoromethanesulfonyl)imide or lithium bis(perfluoroethylsulfonyl)imide, and preferably, the lithium imide-based salt is lithium bis(fluorosulfonyl)imide or lithium bis(trifluoromethanesulfonyl)imide.

Based on the above disclosure, it will be understood by those of ordinary skill in the art that various applications and modifications can be made within the scope and spirit of the present disclosure.

### [industrial Applicability]

As described above, since the secondary battery according to the present disclosure has an anti-corrosion layer formed on an inner surface of the battery case capable of coming into contact with the electrolyte solution, and thus it is possible to effectively prevent and/or suppress corrosion due to the electrolytic solution.

## Claims

1. A cylindrical secondary battery configured such that an electrode assembly including a positive electrode, a separator, and a negative electrode is housed in a battery case together with an electrolyte solution,
wherein the battery case is made of metal, and comprises
a cylindrical can that includes a housing part in which the electrode assembly and the electrolyte solution are housed together and a beading part located at an upper part of the housing part; and a cap assembly that is mounted on the opened upper end part of the cylindrical can and includes an upper end cap as a protrusion-type electrode terminal, and
wherein an anti-corrosion layer of an organic-inorganic mixed layer is formed on the inner surface of the housing part where the battery case comes into contact with the electrolyte solution, or on the inner surface of the housing part and the beading part.

2. The secondary battery according to claim 1, wherein:
the metal is made of any one selected from the group consisting of aluminum, nickel, stainless steel (SUS), copper, iron, bronze, and brass.

3. The secondary battery according to claim 1, wherein:
the electrode assembly is a jelly-roll type or stack/folding type electrode assembly.

4. The secondary battery according to claim 1, wherein:
a gasket is mounted on the upper part of the beading part of the cylindrical can,
the cap assembly is configured such that a safety device for current interruption (PTC device) and a safety vent for internal pressure drop are stacked under the upper end cap, and a current interruption device (CID) is formed at the lower end of the safety vent,
the electrode assembly comprises a positive electrode tab and a negative electrode tab that are drawn out from the electrode assembly, wherein the positive electrode tab is connected to the cap assembly, and the negative electrode tab is connected to the bottom surface spaced apart from the housing part of the cylindrical can, and
the anti-corrosion layer is formed on the surface of the gasket toward the inside surface of the secondary battery.

5. The secondary battery according to any one of claims 1 to 5, wherein:
the secondary battery further comprises a hollow center pin inserted into the central part of the electrode assembly, and the anti-corrosion layer is further formed on the outer surface where the center pin and the electrolyte solution come into contact with each other.

6. The secondary battery according to claim 5, wherein:
an anti-corrosion layer is further formed even on the hollow inner surface of the center pin.

7. The secondary battery according to claim 5, wherein:
the center pin is made of any one selected from the group consisting of aluminum, nickel, stainless steel (SUS), copper, iron, bronze, and brass.

8. The secondary battery according to claim 1, wherein:
the organic-inorganic mixed layer comprises one or more inorganic particles selected from the group consisting of (a) inorganic particles having a dielectric constant of 1 or more, (b) inorganic particles having piezoelectricity, (c) thermal conductive inorganic particles and (d) inorganic particles having lithium ion transport capability, and a binder polymer.

9. A prismatic secondary battery configured such that an electrode assembly including a positive electrode, a separator, and a negative electrode is housed in a battery case together with an electrolyte solution,
wherein the battery case is made of metal, and comprises
a rectangular can body that is opened in its upper end and houses the electrode assembly and the electrolyte solution together; and a top cap including cap terminals that are coupled and sealed to the upper end part of the can body and are connected to the electrode terminals of the electrode assembly, and
wherein an anti-corrosion layer of an organic-inorganic mixed layer is formed on the inner surface of the can body where the battery case comes into contact with the electrolyte solution, or on the inner surface of the can body and the inner surface of the top cap excluding the cap terminals.

10. The secondary battery according to claim 9, wherein:
the metal is made of any one selected from the group consisting of aluminum, nickel, stainless steel (SUS), copper, iron, bronze, and brass.

11. The secondary battery according to claim 9, wherein:
the electrode assembly is a jelly-roll type or stack/folding type electrode assembly.

12. The secondary battery according to claim 9, wherein:
the electrode assembly comprises a positive electrode tab and a negative electrode tab drawn out from the electrode assembly, and the positive electrode tab and the negative electrode tab are connected to the cap terminals, respectively.

13. The secondary battery according to any one of claims 9 to 12, wherein:
the secondary battery further comprises a hollow center pin inserted into the central part of the electrode assembly, and the anti-corrosion layer is further formed on the outer surface where the center pin and the electrolyte solution come into contact with each other.

14. The secondary battery according to claim 13, wherein:
an anti-corrosion layer is further formed even on the hollow inner surface of the center pin.

15. The secondary battery according to claim 13, wherein:
the center pin is made of any one selected from the group consisting of aluminum, nickel, stainless steel (SUS), copper, iron, bronze, and brass.

16. The secondary battery according to claim 9, wherein:
the organic-inorganic mixed layer comprises one or more inorganic particles selected from the group consisting of (a) inorganic particles having a dielectric constant of 1 or more, (b) inorganic particles having piezoelectricity, (c) thermal conductive inorganic particles and (d) inorganic particles having lithium ion transport capability, and a binder polymer.
